# EUROPEAN PATENT APPLICATION

(11) **EP 2 945 114 A1**
(43) Date of publication of application: **18.11.2015**
(21) Application number: 13870443.2
(22) Date of filing: 11.01.2013
(51) Int. Cl.: G06Q 30/06, G06Q 50/04

(54) **METHOD FOR SELLING CUSTOMIZED PET FOOD ONLINE**

(30) Priority: 09.01.2013 KR 20130002340
(71) Applicant: Erebon Co., Ltd., Icheon-si, Gyeonggi-do 467-873 (KR); Park, Sang O, Icheon-si, Gyeonggi-do 467-873 (KR)
(72) Inventor: PARK, Sang O, Icheon-si Gyeonggi-do 467-873 (KR)
(74) Representative: Cabinet Chaillot
(86) International application number: PCT/KR2013/000227
(87) International publication number: WO 2014/109424

(57) **Abstract**

Disclosed is a method for selling pet food customized for an individual pet online. The online selling method according to one embodiment of the present invention is a method which implements a computer for selling pet food online and comprises: a step for providing a user interface input screen to an orderer terminal connected to the Internet, wherein the user interface input screen is for inputting body information on individuals to be belonging to a specific pet type for items comprising the body information of the specific pet type; a step for receiving the body information on the individual pet to be inputted for the items from the orderer terminal; a step for determining a mixing ratio of raw materials for a pet food customized for the individual pet to be based on the received body information; a step for requesting the orderer terminal to pay for the pet food having the determined mixing ratio of raw materials; and a step for ordering the production of the pet food when the payment of the pet food is completed. According to the present invention, a pet food customized according to body information on an individual pet can be provided even if each of the individual pets belonging to a specific pet type has different and diverse body information.

## Description

### BACKGROUND

### (a) Technical Field

The present invention relates to a method for selling customized pet food online, and more particularly, it relates to a method for selling customized pet food online through the Internet and the like.

### (b) Background Art

A pet is an animal which human raise as a target which pleases human. Population raising the pet is being increased in relation with the tendency of increase of nuclear families due to sub-replacement fertility, aging, and increase of single-person household. Furthermore, population raising the pet as a companion in life like another family is being increased.

As the traditional pet type, there are dog, cat and the like. Taking the dog among these as an example, the individual pet dogs have a variety of body information different from each other. Specifically, there are a variety of species of individual pet dogs, and the individual pet dogs of same species each has various age. The individual pet dogs of same species and ages each has various weights. Furthermore, some individual pet dogs are suffering from diseases, the number and kinds of diseases from which the individual pet dogs are suffering are various.

Nevertheless, the pet dog food is in general manufactured with one same mixing ratio of raw materials for all individual pet dogs or with the mixing ratio of raw materials specified to only one body information item such as weight, skin disease or articulation disease. The products manufactured as such are displayed in the online shop or offline shop by the seller and are directly selected and purchased by theorderer.

However, there is a problem in that in case where the pet dog suffering from a disease eats the pet dog food manufactured with the one same mixing ratio of raw materials, the disease can be further aggravated, and in case where a fat pet dog eats it, the weight can be further increased. Although the pet dog food manufactured with the mixing ratio of raw materials specified to one body information item can have an efficacy for the relevant body information item, it has a problem in that it can aggravate the health of the pet dog food in relation with other body information item. In addition, in case where the orderer lack of veterinary knowledge directly select either one among the various kinds of pet dog foods, there is a problem in that the selected pet dog food can aggravate the health of the pet dog contrary to the orderer's intention.

Meanwhile, according to the conventional selling method of the pet dog food, the seller manufactures in advence and preserves the pet dog food before the deal is made. Thereafter, when the orderer selects the pet dog food and the deal is made, the seller delivers to the orderer the product which the seller manufactured in advance and preserved.

Accordingly, there is a problem in that the orderer do not receive a fresh product directly delivered right after the manufacture, but receives a product having relatively low freshness by being delivered after a lapse of the duration of preservation. Furthermore, there is a problem in that since manufacturing in advance and preserving the pet dog food which has almost no or low possibility of selling can cause an economic loss, it is difficult for the seller to sell the variety of kinds of pet dog foods.

### SUMMARY OF THE DISCLOSURE

The object of the present invention is to provide a method for selling customized pet food online, with which method a pet food customized according to body information on an individual pet are provided on the basis of the order even if each of the individual pets belonging to a specific pet type has different and diverse body information.

The method for selling customized pet food online to accomplish the object described above is a method which implements a computer for selling pet food online comprising: a step for providing a user interface input screen to an orderer terminal connected to the Internet, wherein the user interface input screen is for inputting body information on individuals to be belonging to a specific pet type for items comprising the body information of the specific pet type; a step for receiving the body information on the individual pet to be inputted for the items from the orderer terminal; a step for determining a mixing ratio of raw materials for a pet food customized for the individual pet to be based on the received body information; a step for requesting the orderer terminal to pay for the pet food having the determined mixing ratio of raw materials; and a step for ordering the production of the pet food when the payment of the pet food is completed.

Preferably, the items comprise species, age, and weight. Preferably, the items further comprises whether or not suffering from each of at least one of the diseases. Preferably, the at least one of the diseases comprises at least one of urinary disease, skin disease, alimentary disease, oral disease, liver disease, articular disease, and heart disease.

Preferably, the user interface input screen provides a list of candidates which can be input for the items.

Preferably, the step for determining comprises: a step for detecting the mixing ratio of raw materials of the customized pet food corresponding to the received body information from the database in which the body information which the pet type can have are matched to the corresponding mixing ratio of raw materials of the customized pet food; and a step for determining the detected mixing ratio of raw materials as the mixing ratio of raw materials of the customized pet food for the individual pet.

Preferably, the step for providing comprises: a step for requesting the orderer terminal for information on the orderer: a step for receiving the requested information on the orderer from the orderer terminal: and a step for providing the user interface input screen to the orderer terminal only in the case where the qualification condition required of the orderer is satisfied by the received information on orderer.

Preferably, the qualification condition is satisfied in the case where the orderer is the veterinarian.

Preferably, the method further comprises a step for transferring the fees to the account of orderer when the payment is completed.

Preferably, the step for ordering comprises a step for transmitting to a factory server an information on production order of the pet food which is paid for when the payment is completed.

Preferably, the method further comprises a step for ordering to deliver to the orderer the pet food manufactured according to the production order.

### (Effects of the present invention)

According to the present invention, a pet food customized according to body information on an individual pet can be provided even if each of the individual pets belonging to a specific pet type has different and diverse body information. Therefore, the maintenance and recovery of the health of the individual pet dog can be secured.

The orderer does not directly select the customized pet food but only provides the body information on the individual pet for the plural items, and the customized pet food for the individual pet can be determined to be a product having the mixing ratio of raw materials customized to the body information of the individual pet according to the matching relation established through the review made by the specialists. This can secure the safety of the pet dog and can ensure the efficacy of the pet food.

Since the mixing ratio of raw materials is only determined at the deal process, the production of the pet food is carried out on the basis of the order after the deal is made. This makes it possible to provide the relatively more fresh pet food to the consumers in comparison to the prior art in which the pet food produced in advance and reserved is delivered. Furthermore, this enables the seller to sell the variety of kinds of pet dog food without the burden of stock.

In addition, by making only the veterinarian able to order and transferring the fees to the veterinarian after the deal is made, the veterinarian not only can create the direct profit through the fees but also can create the indirect profit from the customers visiting to order the pet food. The customers visiting the veterinarian to order the pet food can also further secure and rely on the safety of the pet food by ordering the pet food through the veterinarian.

### BRIEF DESCRIPTION OF THE DRAWINGS

FIG. 1 is a block diagram of an online selling system according to an embodiment of the present invention:
FIG. 2 is a block diagram of a selling server of FIG. 1;
FIG. 3 is a drawing showing an example of a matching table stored in a pet food matching DB of FIG. 2;
FIG. 4 is a drawing showing an example of a file of mixing ratio of raw materials for a customized pet food corresponding to a pet food code '000881' of FIG. 3;
FIG. 5 is a flow diagram of an online selling method performed by the selling server of FIG. 1;
FIG. 6 is a drawing showing an example of a user interface input screen provided at FIG. 5;
FIG. 7 is a drawing showing a condition where a species selection icon is clicked on the user interface input screen of FIG. 6;
FIG. 8 is a drawing showing a condition where an age selection icon is clicked on the user interface input screen of FIG. 6;
FIG. 9 is a drawing showing a condition where a weight selection icon is clicked on the user interface input screen of FIG. 6;
FIG. 10 is a drawing showing a condition where 'skin' is selected on the user interface input screen of FIG. 6; and
FIG. 11 is a flow diagram of a step for determining mixing ratio of raw materials of FIG. 5.

### DETAILED DESCRIPTION

Hereinafter, preferred embodiments of the present invention will be described in detail with reference to the accompanying drawings. The terminologies or words used in the present specification should not be interpreted with limitation to the typical sense or to the sense defined in the dictionary, but should be interpreted to have the sense and concept appropriate to the technical idea of the present invention based on the principle that the inventor can properly define the concept of the terminologies to best describe his invention.

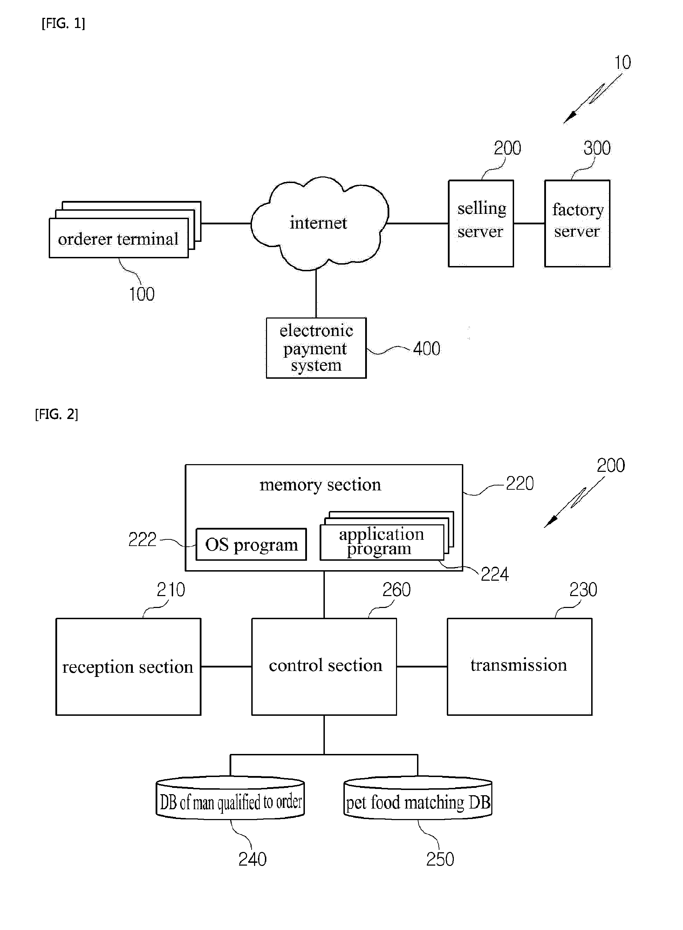

FIG. 1 is a block diagram of an online selling system 10 according to an embodiment of the present invention. Referring to FIG. 1, the online selling system 10 comprises an orderer terminal 100, a selling server 200, a factory server 300, and an electronic payment system 400.

The orderer terminal 100 is used by an orderer of a pet food. For example, the orderer terminal 100 is a desk top computer, a notebook computer, a smart phone and the like. The orderer terminal 100 includes at least one of a wired communication means and a radio communication means for connecting to the Internet. The internet corresponds to an example of a communication network.

The selling server 200 is used by a seller of the pet food. For example, the selling server 200 is a general server computer. The selling server 200 also includes at least one of the wired communication means and the radio communication means for connecting to the Internet. The selling server 200 performs an online selling method according to the present invention. Through this performance, the selling server 200 provides an online selling service of a customized pet food to the orderer terminal 100 connected to the Internet.

The factory server 300 is used by a manufacturer of the pet food. The factory server 300 and the selling server 200 can exchange data with each other through a communication network such as the Internet, a LAN (Local Area Network), a VAN (Value Added Network) and the like.

The manufacturer of the pet food can not only manufacture the pet food, but also deliver the manufactured pet food to a place designated by the orderer. Therefore, the factory server 300 can be used by the deliverer of the pet food. Furthermore, in some cases, the selling server 200 can be used as the factory server 300.

The electronic payment system 400 services in such a way that the payment of the pet food can be carried out online between the orderer and the seller. The electronic payment system 400 can be implemented by utilizing the conventional technology.

A PG (Payment Gateway) server can be included in the electronic payment system 400. The PG server provides a service of executing as proxy in doing business with financing agencies on the Internet. The PG server executes as proxy in a variety of small sum payment services such as credit card, account tranfer, payment on a mobile phone, ARS payment and the like.

FIG. 2 is a block diagram of the selling server 200 of FIG. 1. Referring to FIG. 2, the selling server 200 comprises a reception section 210, a memory section 220, a transmission section 230, a DB of man qualified to order 240, a pet food matching DB 250, and a control section 260.

The reception section 210 receives data through a wired or radio circuit. The wired or radio circuit can be connected to the Internet or be directly connected to other devices.

The memory section 220 stores computer programs. An OS (Operating System) program 222 and an application program 224 are included in the computer programs stored in the memory section 220. A computer program for performing the online selling method according to the present invention is included in the application program 224.

The memory section 220 stores, in addition to the computer programs, data used in performing the online selling method according to the present invention.

The transmission section 230 transmits data through a wired or radio circuit. The wired or radio circuit can be connected to the Internet or be directly connected to other devices. The circuit through which the transmission section 230 transmits data and the circuit through which the reception section 210 receives data can be identical.

The DB of man qualified to order 240 is a collection of data representing personal information on the man qualified to order. The man qualified to order refers to a man confirmed to satisfy a necessary qualification condition required for the orderer. In the present embodiment, the necessary qualification condition required for the orderer is satisfied when the orderer is a veterinarian.

In the DB of man qualified to order 240, personal information such as ID, password, name, account information, address, E-mail, telephone number and the like of each man qualified to order are stored. The information in the DB of man qualified to order 240 can be encoded for security.

The pet food matching DB 250 matches body information which a specific pet type can have to a code and a mixing ratio of raw materials of a corresponding customized pet food. The relation of matching the mixing ratio of raw materials to body information is set to customize the corresponding body information through a review made by a specialist such as the veterinarian. The body information matched to each customized pet food consists of data set of plural items constituting the body information on the specific pet type.

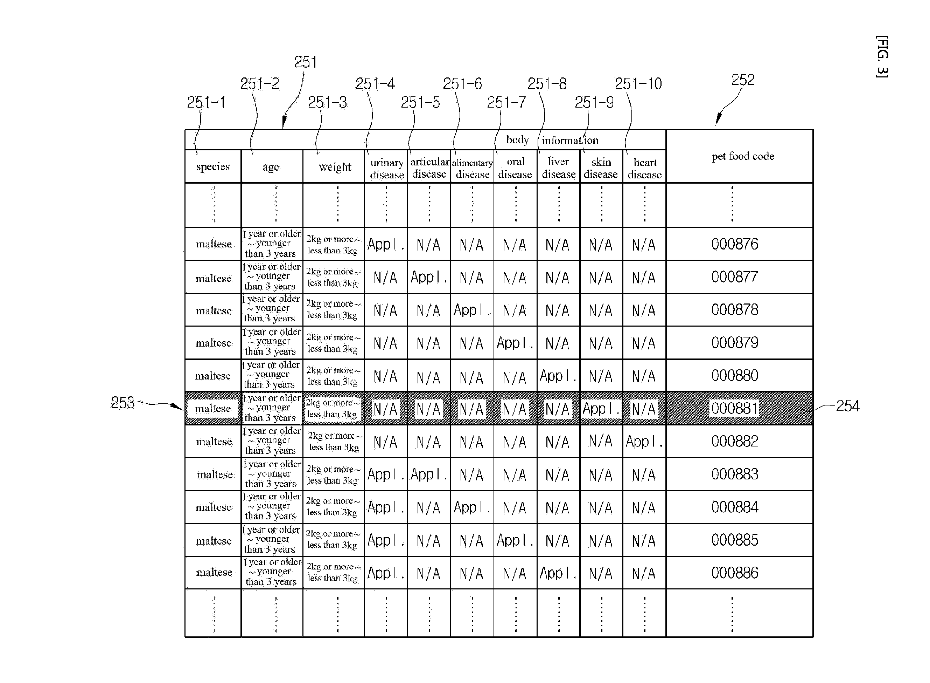

In the present embodiment, the specific pet type is a dog. Accordingly, the pet food matching DB 250 matches body information which a pet dog can have to the code and the mixing ratio of raw materials of the corresponding customized pet food. The selling server 200 can detect the code and the mixing ratio of raw materials of the customized pet food corresponding to the body information on a certain pet dog by using the pet food matching DB 250. FIG. 3 is a drawing showing an example of a matching table stored in a pet food matching DB 250 of FIG. 2. Referring to FIG. 3, the matching table consists of a body information column 251 and a pet food code column 252.

In the body information column 251, the body information which the pet dog can have is recorded as data set for plural items 251-1 to 251-10. The plural items include species 251-1, age 251-2, and weight 251-3. The plural items further includes whether applicable or not to each of diseases which the pet dog can have. These diseases include urinary disease 251-4, articular disease 251-5, alimentary disease 251-6, oral disease 251-7, liver disease 251-8, skin disease 251-9, and heart disease 251-10.

The body information on individual pet dog is identified by the data set recorded in each row in the body information column 251. The body information for all cases which the pet dog can have is recorded over the rows.

In the pet food code column 252, identification codes of the customized pet food for the body information recorded in the corresponding row. The body information recorded in a certain row matches the customized pet food having the pet code recorded in the same row.

The customized pet food has the mixing ratio of raw materials customized to the corresponding body information. For example, in case where there is the heart disease in the body information, the mixing ratio of raw materials customized to the case is in such a way that the contents of the meat supplying the amino acid and the protein are increased and the amount of the fat is increased for the pet dog having the heart cachexia (muscle waste). In the case where there is the heart disease in the body information but the weight is excessive, the mixing ratio of raw materials customized to this case is in such a way that the amount of the fat is relatively reduced from the mixing ratio of raw materials for the case described above. In case where there is the skin disease in the body information, the mixing ratio of raw materials customized to this case is in such a way that the ratio of the raw materials using the protein source such as the mutton or the salmon is increased. As such, the mixing ratio of raw materials for certain customized pet food can be determined by adding or reducing a specific raw material according to the corresponding body information from the mixing ratio of raw materials customized for other body information.

The composition of the mixing ratio of raw materials according to each of body information is established through a review made by specialists such as the veterinarian. This can secure the safety of the individual pet dog which will eat the customized pet food, and can ensure the efficacy of the customized pet food.

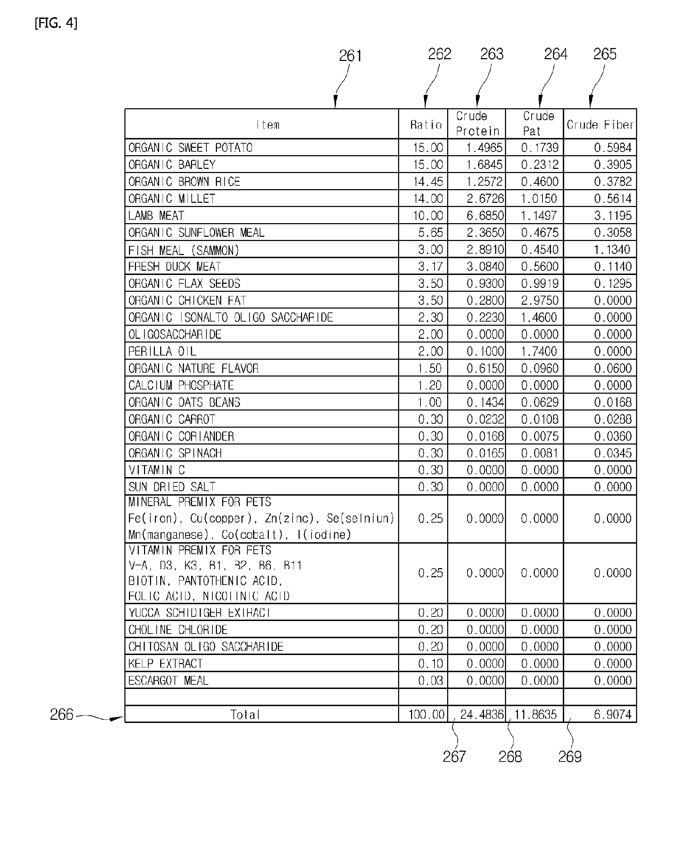

FIG. 4 is a drawing showing an example of a file of mixing ratio of raw materials for a customized pet food corresponding to a pet food code '000881' 254 of FIG. 3. Referring to FIG. 4, in item column 261 are recorded the raw materials of the customized pet food. In ratio column 262 are recorded the ratio which each raw material occupies in the customized pet food.

In crude protein column 263, crude fat column 264, and crude fiber column 265 are recorded amounts of relevant components which each raw material has.

In the most low row 266 are recorded the totals of the values recorded in each column. The total 267 of the values recorded in the crude protein column 263 represents the content of the crude protein in the customized pet food. The total 268 of the values recorded in the crude fat column 264 and the total 269 of the values recorded in the crude fiber column 265 also represent the content of the crude fat and the content of the crude fiber, respectively. On the one hand, crude ash and the like can be further included as the component of the customized pet foodin addition to the crude protein, the crude fat, and the crude fiber.

The file of mixing ratio of raw materials of FIG. 4 is linked to relevant customized pet food in the matching table of FIG. 3 and stored in the pet food matching DB 250. The selling server 200 can detect the pet food code of the customized pet food in the matching table of FIG. 3, and detect the mixing ratio of raw materials and the component content of the customized pet food from the file of mixing ratio of raw materials linked to the detected pet food code.

Again referring to FIG. 2, the DB of man qualified to order 240 and the pet food matching DB 250 can either be stored in the memory section 220 or in an external device connected through the communication network.

The control section 260 controls the reception section 210, the memory section 220, the transmission section 230, the DB of man qualified to order 240, and the pet food matching DB 250 and performs the online selling method according to the present invention.

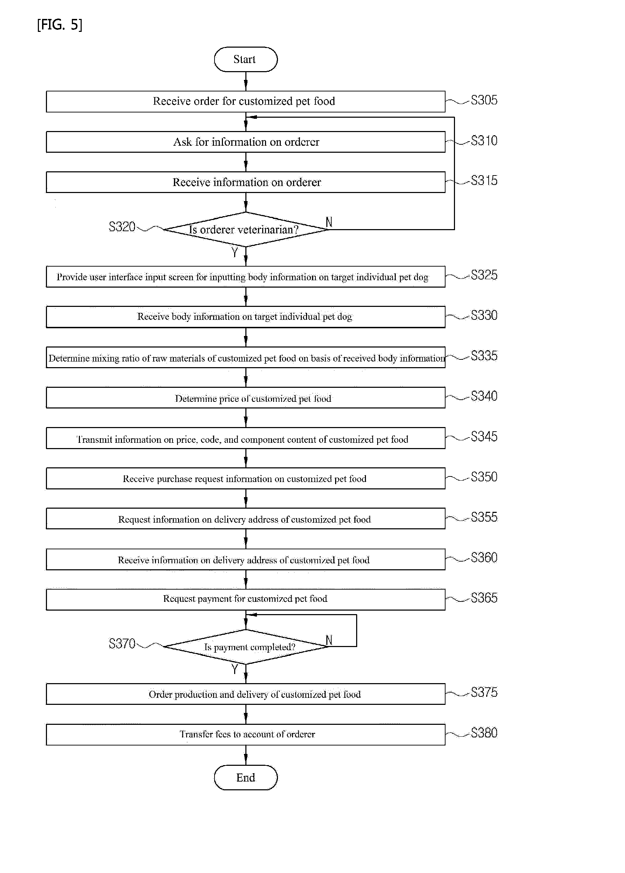

FIG. 5 is a flow diagram of an online selling method 20 performed by the selling server 200 of FIG. 1. Referring to FIG. 5, the selling server 200 receives an order for the customized pet food from the orderer terminal 100 connected to the Internet S305.

The selling server 200, in response thereto, asks the orderer terminal 100 for information on orderer S310. The requested information on orderer is information which can prove that the orderer is the veterinarian. In this information can be included a copy of a certificate of qualification of the veterinarian of the orderer. When necessary, the copy of the certificate of residence of the orderer can be included.

The selling server 200 receives information on the orderer from the orderer terminal 100 S315. The seller judges whether the orderer is the veterinarian based on the received copy of the certificate of qualification of the veterinarian S320.

The selling server 200 provides an ID to the orderer when the orderer is confirmed to be the veterinarian by the seller. The selling server 200 can either provide a newly generated ID unless the newly generated ID is not overlapping with the ID already provided to other veterinarian, or provide an ID which the orderer wishes to have. A password is provided which the orderer wishes to have. The selling server 200 registers the provided ID and the password to the DB of man qualified to order 240.

The selling server 200 asks the orderer terminal 100 for remaining personal information to register to the DB of man qualified to order 240 the remaining personal information on the person confirmed to be the veterinarian. The selling server 200 registers the remaining personal information to the DB of man qualified to order 240 upon receiving it from the orderer terminal 100. The selling server 200 can ask for ID of the orderer in substitution of the copy of the certificate of qualification of the veterinarian of the orderer in the step 310 of asking the orderer terminal 100 for information on orderer.

In this case, the selling server 200, upon receiving the ID from the orderer terminal 100 S315, judges whether the orderer is the veterinarian based on the received ID S320. Specifically, the selling server 200 judges whether the received ID is the one stored in the DB of man qualified to order 240. The orderer whose ID was stored in the DB of man qualified to order 240 is the person who is already confirmed to be the veterinarian. Therefore, if the received ID is the one stored in the DB of man qualified to order 240, the orderer is determined to be the veterinarian.

To prevent the plagiarism of the ID, the selling server 200 can ask for the password of the orderer at the same time when it asks the orderer terminal 100 of the ID of the orderer. If the selling server 200 detects the ID consistent with the ID received from the DB of man qualified to order 240, it judges whether the received password is consistent with the password recorded in the same row as the received ID. The selling server 200 determines that the orderer is the veterinarian, only if the passwords are consistent.

If the selling server 200 determines that the orderer is not the veterinarian, it again asks the orderer terminal 100 for the information on orderer. If the selling server 200 confirms that the orderer of the veterinarian, it provides the orderer terminal 100 with a user interface input screen for inputting the body information on the target individual pet dog S325.

The orderer inputs, through the user interface input screen displayed on the orderer terminal 100, the body information on the target individual pet dog for each of the items 251-1 to 251-10 which composes the body information 251 in the pet food matching DB 250.

For example, the target individual pet dog is a pet dog raised by a customer visiting the orderer's hospital. As described above, if the selling server 200 determines that the orderer is not the veterinarian, it only again asks the orderer terminal 100 for the information on orderer but not provides the user interface input screen. Accordingly, one who is not the veterinarian cannot order the customized pet food. Therefore, one who is not the veterinarian visits the veterinarian's hospital to purchase the customized pet food for the pet dog he raises, and the veterinarian on behalf of the visiting customer orders the customized pet food for the pet dog the customer raises.

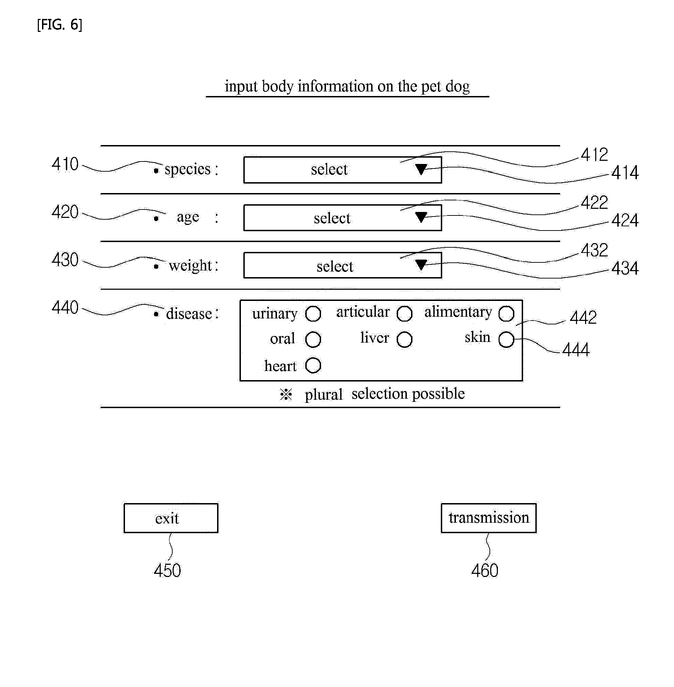

FIG. 6 is a drawing showing an example of a user interface input screen provided at FIG. 5. Referring to FIG. 6, the user interface input screen 400 enables the orderer to input the body information on the individual pet dog for the species 410, age 420, weight 430, and various deseases 440 which are items composing the body information on the pet dog.

Hereinbelow, for a case where the species, age, and weight of the target individual pet dog are 'maltese', '2-years old', and '2.5 kg', respectively and the target individual pet dog has a skin desease, an embodyment in which the orderer inputs the body information on the target individual pet dog through the user interface input screen 400 will be described.

The orderer clicks a species selection icon 414 by means of a mouse to input the body information on the individual pet for the species 410 above all among the items composing the body information on the pet. The species selection icon 414 exists in a form of an inverse triangle at the right side in a species input box 412.

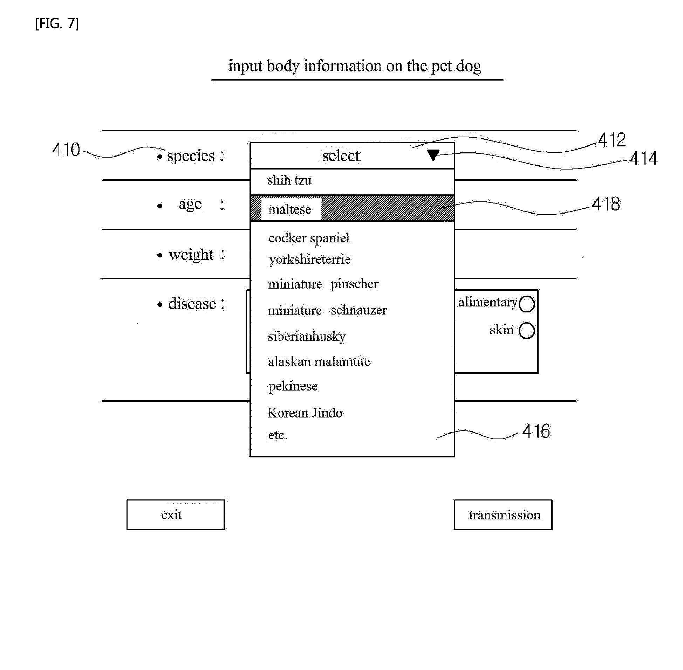

FIG. 7 is a drawing showing a condition where the species selection icon 414 is clicked on the user interface input screen of FIG. 6. Referring to FIG. 7, a species selection box 416 is developed from the species input box 412 by a click of the species selection icon 414.

On the species selection box 416 is displayed a list of candidates which can be input for the species. These candidates inlude shih tzu, maltese, codker spaniel, yorkshireterrie, miniature pinscher, miniature schnauzer, siberianhusky, alaskan malamute, pekinese, Korean Jindo, etc.. The user selects one in the list of the candidates.

In the present embodiment, the species of the target individual pet dog is assumed to be the maltese. Accordingly, the orderer selects 'maltese' in the list of the candidates. The selected 'maltese' is input as the body information on the target individual pet dog for the species.

The list of the candidates displayed on the species selection box 416 can be variously changed. For example, the list of the candidates can consists of large dog, middle size dog, and small dog. For other example, the list of the candidates can be classified into large dog, middle size dog, and small dog, and these can each consists of relevant detail species. Furthermore, in the list of the candidates can be inluded species of mix dog.

Again referring to FIG. 6, the orderer next clicks an age selection icon 424 by means of the mouth to input the body information on the target individual pet dog for age 420. The age selection icon 424 exists in a form of an inverse triangle at the right side in an age input box 422.

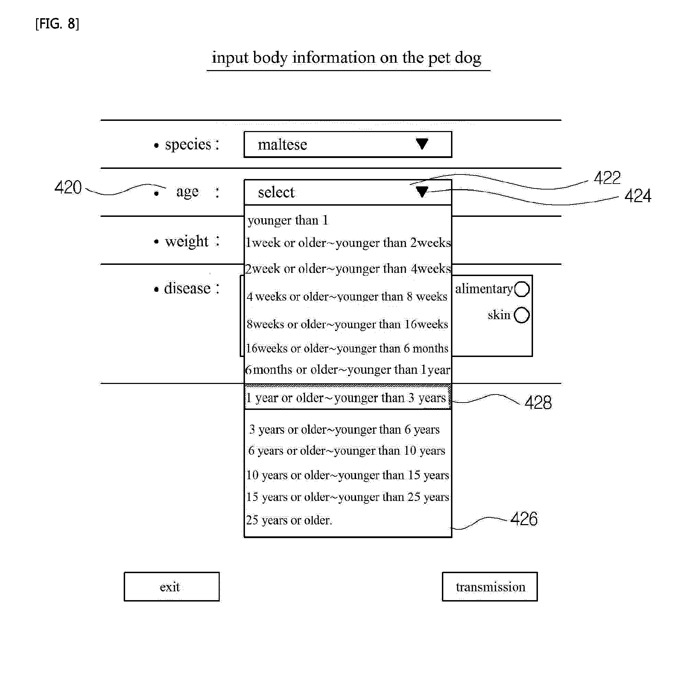

FIG. 8 is a drawing showing a condition where the age selection icon 424 is clicked on the user interface input screen of FIG. 6. Referring to FIG. 8, an age selection box 426 is developed from the age input box 422 by a click of the age selection icon 424.

On the age selection box 426 is displayed a list of candidates which can be input as the body information on the target individual pet dog for the age. These candidates consist of age intervals of younger than 1 week, 1 week or older ∼ younger than 2 weeks, 2 weeks or older ∼ younger than 4 weeks, 4 weeks or older ∼ younger than 8 weeks, 8 weeks or older ∼ younger than 16 weeks, 16 weeks or older ∼ younger than 6 months, 6 months or older ∼ younger than 1 year, 1 year or older ∼ younger than 3 years, 3 years or older ∼ younger than 6 years, 6 years or older ∼ younger than 10 years, 10 years or older ∼ younger than 15 years, 15 years or older ∼ younger than 25 years, 25 years or older. The orderer selects one among the list of the candidates. In the present embodiment, the age of the target individual pet dog is assumed to be 2 years old. Accordingly, the orderer selects '1 year or older ∼ younger than 3 years' in the list of the candidates.The selected '1 year or older ∼ younger than 3 years' is input as the body information on the target individual pet dog for the age.

Again referring to FIG. 6, the orderer next clicks a weight selection icon 434 by means of the mouth to input the body information on the target individual pet dog for weight 430. The weight selection icon 434 exists in a form of an inverse triangle at the right side in a weight input box 432.

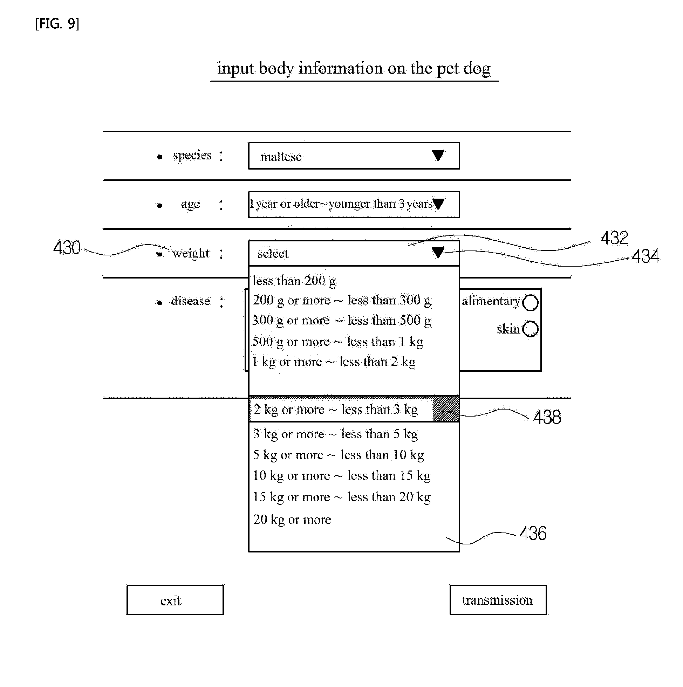

FIG. 9 is a drawing showing a condition where the weight selection icon 434 is clicked on the user interface input screen of FIG. 6. Referring to FIG. 9, an weight selection box 436 is developed from the weight input box 432 by a click of the weight selection icon 434.

On the weight selection box 436 is displayed a list of candidates which can be input as the body information on the target individual pet dog for the weight. These candidates consist of weight intervals of less than 200 g, 200 g or more ∼ less than 300 g, 300 g or more ∼ less than 500 g, 500 g or more ∼ less than 1 kg, 1 kg or more ∼ less than 2 kg, 2 kg or more ∼ less than 3 kg, 3 kg or more ∼ less than 5 kg, 5 kg or more ∼ less than 10 kg, 10 kg or more ∼ less than 15 kg, 15 kg or more ∼ less than 20 kg, 20 kg or more. The orderer selects one among the list of the candidates.

In the present embodiment, the weight of the target individual pet dog is assumed to be 2.5 kg. Accordingly, the orderer selects '2 kg or more ∼ less than 3 kg' in the list of the candidates. The selected '2 kg or more ∼ less than 3 kg' is input as the body information on the target individual pet dog for the weight.

Again referring to FIG. 6, on the disease selection box 442 is displyed a list of diseases which are included in the body information items. These diseases consist of urinary disease, articular disease, alimentary disease, oral disease, liver disease, skin disease, and heart disease. The disease input icon 444 exists in a form of a hollow circle shape at the right side of each disease.

The orderer clicks a disease input icon for the disease which the target individual pet dog has. In case of no disease, none canbe clicked. In case of plural diseases, all the disease input icons can be clicked for each of plural diseases.

In the present embodiment, the target individual pet dog is assumed to have the skin disease. Accordingly, the orderer selects 'skin' in the list of the diseases.

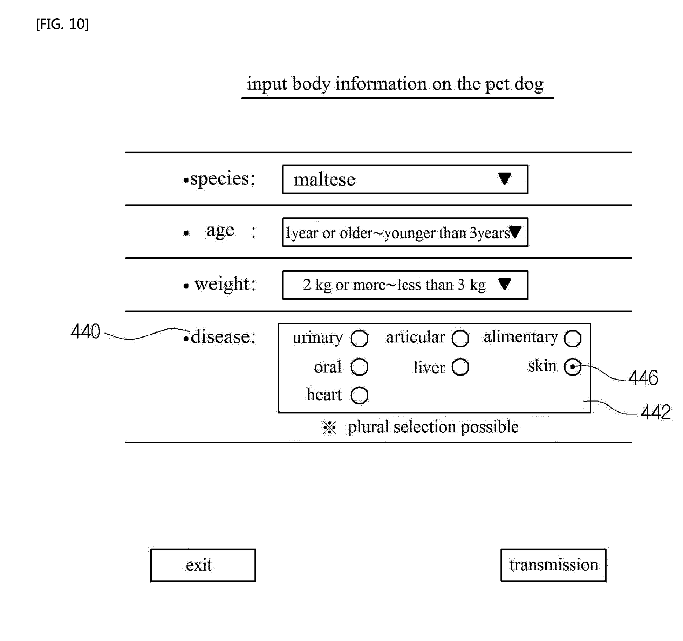

FIG. 10 is a drawing showing a condition where the "skin" is selected on the user interface input screen of FIG. 6. Referring to FIG. 10, a solid circle shape mark 446 of the disease input icon for the 'skin' is displayed by the selection of the 'skin'. The selected 'skin' is input as the body information on the target individual pet dog for the disease.

Again referring to FIG. 6, the orderer can at any time abandon the input of the body information by clicking an 'exit' icon 450. The orderer clicks a 'transmit' icon 460 upon completion of the input of the body information. Then, the orderer terminal 100 transmits the body information on the target individual pet dog input for the items 410 to 440 to the selling server 200. That is, the orderer terminal 100 transmits the body information 'maltese' input for the species, the body information '1 year or older ∼ younger than 3 years' input for the age, the body information '2 kg or more ∼ less than 3 kg' input for the weight, and the body information 'skin' input for the disease to the selling server 200.

The selling server 200 receives such body information from the orderer terminal 100 S330. The body information the selling server 200 received is the body information on the target individual pet dog input by the orderer. The selling server 200 determines the mixing ratio of raw materials of the customized pet food for the target individual pet dog based on the received body information S335.

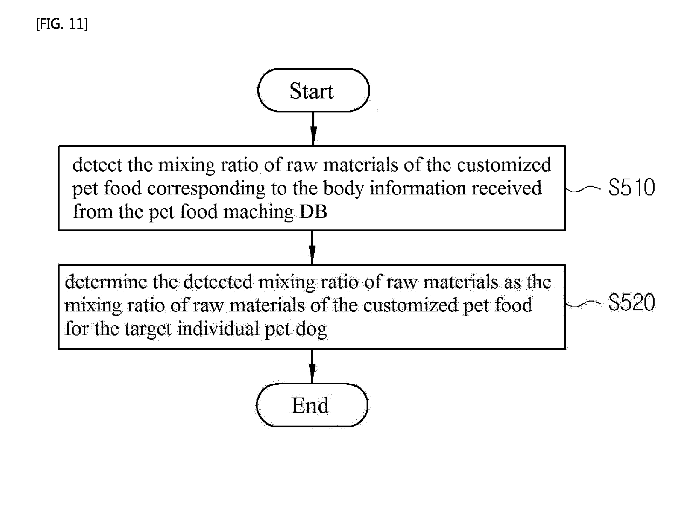

FIG. 11 is a flow diagram of a step S335 for determining mixing ratio of raw materials of FIG. 5. Referring to FIG. 11, the selling server 200 detects the mixing ratio of raw materials of the customized pet food corresponding to the body information received from the pet food matching DB 250 S510.

In the pet food matching DB 250, the body information which the pet dog can have are matched to the corresponding code of customized pet food and the mixing ratio of raw materials. Therefore, the selling server 200 can detect the mixing ratio of raw materials of the customized pet food corresponding to the received body information by using the pet food matching DB 250.

In FIG. 3, in the pet food matching DB 250, in the raw marked with a reference number 253 are recorded the body information that the species is 'maltese', the age is '1 year or older ∼ younger than 3 years', the weight is '2 kg or more ∼ less than 3 kg', and the disease is only at 'skin'. In the column of the pet food code 252 of this raw is recorded '000881' 254. The selling server 200 detects the pet food corresponding to the pet food code '000881' as the customized pet food corresponding to the received body information. The selling server 200 detects the mixing ratio of raw materials of this customized pet food in the file of mixing ratio of raw materials of FIG. 4 linked to the pet food code '000881'. The selling server 200 determines the detected mixing ratio of raw materials to be the mixing ratio of raw materials of the customized pet food for the target individual pet dog S520.

As such, the oderer does not directly select the customized pet food but only provides the body information on the individual pet dog for the plural items, and the customized pet food for the individual pet dog is determined to be a product having the mixing ratio of raw materials customized to the body information on the individual pet dog by the matching relation set through the review made by the specialists. This can secure the safety of the individual pet dog and ensure the efficacy of the pet food.

Again referring to FIG. 5, the selling server 200 determines the price of the determined customized pet food S340. The determined customized pet food means the customized pet food having the determined mixing ratio of raw materials. The price of the determined customized pet food is calculated by the unit price and the order amount of the customized pet food.

Each unit price of the customized pet foods registered in the matching table of FIG. 3 is established in advance. The established unit prices are stored in the pet food matching DB 250 by being linked to the corresponding customized pet food in the matching table of FIG. 3. In the present embodiment, the unit price of the customized pet food having the pet food code '000881' is assumed to be '10,000 won/kg'. The, the selling server 200 detects the unit price '10,000won/kg' in the pet food matching DB 250.

The order amount is received from the orderer terminal 100. To this end, the selling server 200 transmits to the orderer terminal 100 the user interface input screen by which the order amount can be input. This user interface input screen enables the orderer to input the information on the order amount of the customized pet food.

The orderer can input the information on the order amount in the same way as the user interface input screen 400. That is, if the orderer clicks an order amount selection icon by the mouse on the user interface input screen for inputting the order amount, the order amount selection box is developed and on the order amount selection box is displayed the list of the candidates which can be input. The list of the candidates consists of 3 kg, 5 kg, 10 kg, 20 kg, and the like. The orderer selects one in the list of the candidates.

In the present embodiment, the orderer is assumed to order '10 kg'. Accordingly, the orderer selects '10 kg' in the list of the candidates. The selected '10 kg' is input as the order amount of the customized pet food.

If the orderer clicks 'transmit' icon, the orderer terminal 100 transmits the input order amount information to the selling server 200. That is, the orderer terminal 100 transmits '10 kg' as the order amount information to the selling server 200.

By adding to the user interface input screen 400 the user interface input screen for inputting the order amount information, when the body information on the target individual pet dog is received, the order amount information can be received together.

The selling server 200 determines the price of the determined customized pet food by multiplying the received order amount to the detected unit price. In the present embodiment, the price of the determined customized pet food is determined to be 10,000 won/kg * 10 kg = 100,000 won.

The selling server 200 transmits the determined price ('100,000 won') information to the orderer terminal, and simultaneously transmits the pet food code ('000881') information and the component content information on the determined customized pet food S345. The pet food code is detected in the matching table of FIG. 3 and transmitted.

The transmitted pet food code can be used when the orderer wants to order the same pet food later. In that case, the orderer can, without need to again inputting the body information same as the body information input this time, conveniently order the same customized pet food by inputting only the received pet food code. When the selling server 200 receives the pet food code from the orderer terminal 100, it can detect the pet food code in the matching table of FIG. 3 and detect the mixing ratio of raw materials in the file of mixing ratio of raw materials linked to the pet food code.

When the orderer reviews the received price information and the component content information and the like and finds no abnormality, then he transmits information on purchase request of the determined customized pet food to the selling server 200 through the orderer terminal 100.

When the orderer reviews the price information and the component content information and the like and finds abnormality, then he can transmit information on purchase request of other customized pet food through the orderer terminal 100. In this case, the orderer can select the desired customized pet food in the customized pet food list he has, and transmit to the selling server 200 the information on purchase request of the customized pet food selected by him instead of the customized pet food determined by the selling server 200.

When the selling server 200 receives the information on purchase request from the orderer terminal 100 S350, it requests the orderer terminal 100 for information on delivery address for delivery of the customized pet food S355. The orderer inputs the information on delivery address through the orderer terminal 100 to transmit it to the selling server 200. The orderer can input his hospital address or the home address of his customer raising the target individual pet dog as the information on delivery address. The orderer may select his address recorded in the DB of man qualified to order 240 as the delivery address.

When the selling server 200 receives the information on delivery address from the orderer terminal 100 S360, it requests the orderer terminal 100 to pay for the customized pet food S365. The payment may be carried out through the electronic payment system 400.

When the payment is completed S370, the selling server 200 orders production and delivery of paid customized pet food S375. To this end, the selling server 200 transmits to the factory server 300 the information on the production order and the information on the delivery order of the payed customized pet food. The information on the production order and the information on the delivery order may include the determined mixing ratio of raw materials, the amount of customized pet food, the delivery address, the telephone number of orderer and the like. In case where the factory server 300 has the matching table of the pet food code and the mixing ratio of raw materials, the selling server 200 may transmit the pet food code of the determined customized pet food instead of the determined mixing ratio of raw materials. The telephone number of orderer and the like may be detected from the DB of man qualified to order 240 and transmitted.

The factory server 300 produces the customized pet food having the determined mixing ratio of raw materials and delivers it to the delivery address. The production and the delivery of the customized pet food may be carried out respectively by different subjects.

As such, the production of the customized pet food is carried out on the basis of the order after the deal is made. This makes it possible to provide the relatively more fresh pet food in comparison to the prior art in which the seller produces in advance and reserves the pet food and when the deal is made with the orderer, the seller delivers the reserved pet food. Furthermore, this enables the seller to sell the variety of kinds of pet dog food without the burden of stock.

The orderer can be provided with a pet food customized according to body information on a target individual pet dog can be provided even if each of the individual pet dogs has different and diverse body information. Therefore, the maintenance and recovery of the health of the target individual pet dog can be secured.

When the payment is completed S370, the selling server 200 transfers the fees to the account of the orderer S380. The account of the orderer is detected from the DB of man qualified to order 240.

By making only the veterinarian be able to order and transferring the fees to the veterinarian after the deal is made, the veterinarian not only can create the direct profit through the fees but also can create the indirect profit from the customers visiting to order the pet food. The customers visiting the veterinarian to order the pet food can also further secure and rely on the safety of the pet food by ordering the pet food through the veterinarian. The qualification condition required of the orderer can be extended to be satisfied in case where the orderer is recognized to be equivalent to the veterinarian. For example, the qualification condition can be extended to be satisfied in case where the orderer is a member of a pet group.

The method for selling customized pet food online can be applied to other pet type such as the pet cat beside the pet dog. In this case, the items comprising the body information of the target pet type are changed to those appropriate to the relevant pet type, and the mixing ratio of raw materials of the customized pet food are accordingly changed.

The present invention can be implemented as computer readable codes recorded on the computer readable recording medium. The computer readable recording medium includes all kinds of recording devices to which the computer system readable data are stored. The examples of the computer readable recording medium are ROM, RAM, CD-ROM, magnetic tape, floppy disk, optical data storing device and the like, and furthermore includes those implemented in the form of the carrier wave (for example, the transmission through the Internet). In addition, the computer readable recording media are distributed in the computer system connected to a network so that the computer readable codes can be stored and performed in the distribution method.

Hereto, the present invention has been reviewed with a focus on the preferred embodiments thereof. However, it will be appreciated by those skilled in the art that changes may be made in these embodiments without departing from the principles and spirit of the invention. Therefore, the disclosed embodiments should not be considered in view of limitation, but should be considered in view of illustration. The scope of the present invention is not defined in the description given above, but is defined in the appended claims, and all the differences within their equivalent scope should be interpreted to be included in the present invention.

## Claims

1. A method which implements a computer for selling pet food online comprising:
a step for providing a user interface input screen to an orderer terminal connected to the Internet, wherein the user interface input screen is for inputting body information on individuals to be belonging to a specific pet type for items comprising the body information of the specific pet type;
a step for receiving the body information on the individual pet to be inputted for the items from the orderer terminal;
a step for determining a mixing ratio of raw materials for a pet food customized for the individual pet to be based on the received body information;
a step for requesting the orderer terminal to pay for the pet food having the determined mixing ratio of raw materials; and
a step for ordering the production of the pet food when the payment of the pet food is completed.

2. The method of claim 1, wherein the items comprises species, age, and weight.

3. The method of claim 2, wherein the items further comprises whether or not suffering from each of at least one of the diseases.

4. The method of claim 3, wherein the at least one of the diseases comprises at least one of urinary disease, skin disease, alimentary disease, oral disease, liver disease, articular disease, and heart disease.

5. The method of claim 1, wherein the step for determining comprises:
a step for detecting the mixing ratio of raw materials of the customized pet food corresponding to the received body information from the database in which the body information which the pet type can have are matched to the corresponding mixing ratio of raw materials of the customized pet food; and
a step for determining the detected mixing ratio of raw materials as the mixing ratio of raw materials of the customized pet food for the individual pet.

6. The method of claim 1, wherein the step for providing comprises:
a step for requesting the orderer terminal for information on the orderer;
a step for receiving the requested information on the orderer from the orderer terminal; and
a step for providing the user interface input screen to the orderer terminal only in the case where the qualification condition required of the orderer is satisfied by the received information on orderer.

7. The method of claim 6, wherein the qualification condition is satisfied in the case where the orderer is the veterinarian.

8. The method of claim 7, further comprising a step for transferring the fees to the account of orderer when the payment is completed.

9. The method of claim 1, wherein the step for ordering comprises a step for transmitting to a factory server an information on production order of the pet food which is paid for when the payment is completed.

10. A computer readable recording medium in which computer program codes for performing each step of the method claimed in any one of the claims 1 to 9 are recorded.
